# EUROPEAN PATENT APPLICATION

(11) **EP 4 009 616 A1**
(43) Date of publication of application: **08.06.2022**
(21) Application number: 21859363.0
(22) Date of filing: 27.09.2021
(51) Int. Cl.: H04M 1/02

(54) **ELECTRONIC DEVICE**

(30) Priority: 22.10.2020 CN 202011137683
(71) Applicant: Honor Device Co., Ltd., Shenzhen, Guangdong 518040 (CN)
(72) Inventor: WANG, Xuyang, Shenzhen, Guangdong 518040 (CN); GUO, Renwei, Shenzhen, Guangdong 518040 (CN); YAO, Wenxing, Shenzhen, Guangdong 518040 (CN); YIN, Xuewen, Shenzhen, Guangdong 518040 (CN)
(74) Representative: Epping - Hermann - Fischer
(86) International application number: PCT/CN2021/120990
(87) International publication number: WO 2022/083420

(57) **Abstract**

This application provides an electronic device, including: an appearance member, a first housing, and a second housing. The appearance member includes a main body portion, and a first side portion and a second side portion respectively connected to opposite sides of the main body portion, the first side portion and the second side portion are both bent relative to the main body portion, the first side portion, the main body portion, and the second side portion enclose a receiving cavity, and the first side portion and the second side portion are spaced opposite to each other to form an opening of the receiving cavity. The first housing is located in the receiving cavity and includes a first anti-collision portion and a support portion connected to the first anti-collision portion, the first anti-collision portion is connected to the first side portion and located between the first side portion and the support portion, and a material hardness of the first anti-collision portion is less than a material hardness of the support portion. The second housing is located in the receiving cavity; and in a direction from the first side portion to the second side portion, the first housing and the second housing are adjacent to each other side by side, and the second housing is connected to the main body portion and the second side portion. This application resolves a problem of uneven stress on an appearance member due to collision when a housing and the appearance member are assembled.

## Description

This application claims priority to Chinese Patent Application No. 2020111376837, entitled "ELECTRONIC DEVICE" filed with the China National Intellectual Property Administration on October 22, 2020, which is incorporated herein by reference in its entirety.

### TECHNICAL FIELD

This application relates to the field of terminal devices, and in particular, to an electronic device.

### BACKGROUND

To pursue a simple and consistent appearance, an electronic device is usually designed with an integrated appearance member. The appearance member has a main body and side walls, and the side walls are bent relative to the main body. A housing needs to be amounted on an inner side of the appearance member to support the appearance member. Due to such a bending transition structure of the appearance member, when the housing and the appearance member are assembled, the housing may easily collide with the side walls. This causes excessive stress on the side walls, and damage is prone to occur, consequently reducing the reliability of the appearance member.

### SUMMARY

The technical solution of this application provides an electronic device, which can resolve a problem of uneven stress on an appearance member due to collision when a housing and the appearance member are assembled.

The electronic device according to the technical solution of this application includes: an appearance member, a first housing, and a second housing. The appearance member includes a main body portion, and a first side portion and a second side portion respectively connected to opposite sides of the main body portion, the first side portion and the second side portion are both bent relative to the main body portion, the first side portion, the main body portion, and the second side portion enclose a receiving cavity, and the first side portion and the second side portion are spaced opposite to each other to form an opening of the receiving cavity. The first housing is located in the receiving cavity and includes a first anti-collision portion and a support portion connected to the first anti-collision portion, the first anti-collision portion is connected to the first side portion and located between the first side portion and the support portion, and a material hardness of the first anti-collision portion is less than a material hardness of the support portion. The second housing is located in the receiving cavity; and in a direction from the first side portion to the second side portion, the first housing and the second housing are adjacent to each other side by side, and the second housing is connected to the main body portion and the second side portion.

In the technical solution of this application, the appearance member is a component of the electronic device that is exposed to the outside and that can be directly observed by a user. The appearance member may be a component with only mechanical functions, such as a housing; or the appearance member may be an electronic component, such as a display screen (which may be referred to as a main screen). The main body portion may be a plate-shaped structure with a substantially uniform or nonuniform thickness. The structures of the first side portion and the second side portion may be substantially the same or different. The first side portion and/or the second side portion may be a plate-shaped structure with a substantially uniform or nonuniform thickness. Taking the first side portion as an example, the first side portion may have a flat plate structure or be formed by at least two flat plate structures connected end to end, and the first side portion may be connected to the main body portion at an included angle. Alternatively, the first side portion may have a bent plate structure (for example, an approximately arcuate plate), and the first side portion may be transitioned with the main body portion based on bending. Such a structure connected by the first side portion and the main body portion may be referred to as the first side portion being bent relative to the main body portion. That is, a path transitioned from the main body portion to the first side portion has a bending tendency.

In the technical solution of this application, the first housing and the second housing are adjacent to each other side by side, instead of being stacked in a thickness direction of the electronic device. The first housing and the second housing jointly support the appearance member. The first anti-collision portion of the first housing separates the support portion from the first side portion, the first anti-collision portion is in contact with and connected to the first side portion, and the support portion is not in contact with or connected to the first side portion. The material hardness of the first anti-collision portion is less than the material hardness of the support portion. That is, the texture of the first anti-collision portion is relatively soft, and the texture of the support portion is relatively hard. The support portion is mainly configured to ensure structural strength of the first housing, so that the first housing can better support the first side portion, and the hardness of the support portion may be set based on this.

When the first housing is fitted with an inner wall of the first side portion, because the first anti-collision portion has a relatively soft texture, collision of the first anti-collision portion on the first side portion is relatively gentle, and the first side portion receives relatively small impact, so that the first side portion is not prone to damage, thereby improving the reliability of the appearance member. Moreover, considering the limitation of manufacturing accuracy and/or assembly accuracy, the first housing probably cannot be closely adhered to the inner wall of the first side portion, and a part of the first housing may form point contact or line contact with the inner wall of the first side portion. However, because an outer layer of the first housing is the first anti-collision portion with a relatively soft texture, even if the first anti-collision portion forms point contact or line contact with the inner wall of the first side portion, the inner wall of the first side portion is not severely extruded and hit, which can avoid concentration of stress generated on the inner wall of the first side portion, and reduce the risk of damage to the first side portion. Based on this, the reliability of the appearance member is improved.

In an implementation, the first side portion is bent and encloses a first receiving space, and at least part of the first anti-collision portion is located in the first receiving space. In this implementation, the first side portion may have a bent plate-shaped structure; or may be a plate-shaped structure formed by several flat-plate structures connected end to end, where adjacent flat-plate structures form an included angle. The first receiving space may have a corresponding shape. The first anti-collision portion may substantially just fill the first receiving space, that is, a boundary of the first anti-collision portion is substantially flush with a boundary of the first receiving space; or the first anti-collision portion is only partially located in the first receiving space, and is partially outside the first receiving space; or the first anti-collision portion is entirely located in the first receiving space, but the boundary of the first anti-collision portion is retracted within a boundary of an opening of the first receiving space. In the case of limited manufacturing accuracy and/or assembly accuracy, the bent first side portion may be prone to impact, extrusion, and hitting when fitted with the first housing. However, because the first anti-collision portion with a relatively soft texture is designed in this implementation, the impact, extrusion, and hitting on the first side portion can be reduced, concentration of stress generated on the inner wall of the first side portion can be avoided, and the risk of damage to the first side portion can be reduced, so that the reliability of the appearance member is improved.

In an implementation, the first anti-collision portion encloses a second receiving space, and at least part of the support portion is located in the second receiving space. In this implementation, the support portion may substantially just fill the second receiving space, that is, a boundary of the support portion is substantially just flush with a boundary of an opening of the second receiving space; or the support portion may be only partially located in the second receiving space, and may be partially outside the second receiving space; or the support portion may be entirely located in the second receiving space, but the boundary of the support portion is retracted within the boundary of the opening of the second receiving space. The support portion may have a shape adapted to the second receiving space. Such a design of the first anti-collision portion and the support portion can support the first side portion well, and ensure the effect of anti-collision protection for the first side portion.

In an implementation, the support portion is located in the second receiving space, and the support portion fills the second receiving space. That is, the boundary of the support portion is substantially flush with the boundary of the second receiving space. Such a design of the support portion enables the first housing to support the first side portion well, and further makes the structure of the first housing compact, which facilitates the assembly of the first housing.

In an implementation, the first anti-collision portion includes a connection portion and a separation portion; the connection portion is connected to the first side portion, and the connection portion is profiled with the first side portion and encloses a second receiving space; the separation portion is connected to an inner wall of the second receiving space, and divides the second receiving space into different regions; and each of the regions is provided with the support portion, and at least part of the support portion is located in the region. In this implementation, a shape of the connection portion of the first anti-collision portion may be similar to that of the first side portion. The separation portion is located on a side of the connection portion away from the first side portion. There may be n separation portions, where n is a natural number greater than or equal to 2. The n separation portions may divide the second receiving space of the connection portion into n+1 regions, and each region may be provided with a support portion. A single support portion may substantially just fill a single region, that is, a boundary of the support portion is substantially just flush with a boundary of an opening of the region; or the support portion may be only partially located in the region, and may be partially outside the region; or the support portion may be entirely located in the region, but the boundary of the support portion is retracted within the boundary of the opening of the region. The support portion may have a shape adapted to the region. Such a design of the first anti-collision portion and the support portion enables the first housing to support the first side portion well, and ensures the effect of anti-collision protection for the first side portion.

In an implementation, the support portion is located in the region, and the support portion fills the region. In this implementation, the support portion in each region can fill the region. That is, the boundary of the support portion is substantially flush with the boundary of the region. Such a design of the support portion enables the first housing to support the first side portion well, and further makes the structure of the first housing compact, which facilitates the assembly of the first housing.

In an implementation, the first housing includes a second anti-collision portion, the second anti-collision portion is connected to a side of the support portion facing away from the first side portion, and a material hardness of the second anti-collision portion is less than the material hardness of the support portion. In this implementation, the support portion may be sandwiched between the first anti-collision portion and the second anti-collision portion. The texture of the second anti-collision portion is relatively soft, which can avoid collision damage to a component mounted in the appearance member. The size relationship between the material hardness of the second anti-collision portion and the material hardness of the first anti-collision portion is not limited, and the two material hardnesses may be equal or different.

In an implementation, a surface of the first anti-collision portion is provided with at least one first fitting portion spaced apart, a surface of the support portion is provided with at least one second fitting portion spaced apart, and the at least one second fitting portion is connected to the at least one first fitting portion one by one, where one of the first fitting portion and the second fitting portion is a groove and the other is a protrusion, and the protrusion is inserted into the groove to form a connection. In this implementation, the "one by one connection" refers to a one-to-one connection. That is, one first fitting portion is correspondingly connected to one second fitting portion. Such a connection structure is easy to manufacture, and can ensure the connection strength between the first anti-collision portion and the support portion, thereby ensuring that the first housing can support the first side portion well, and ensuring the effect of anti-collision protection for the first side portion.

In an implementation, the first anti-collision portion and the support portion are connected as a whole. In this implementation, the first housing may be manufactured through an integrated process, such as an in-mold injection process, a nano-injection process, or both the nano-injection process and the in-mold injection process. The integrated first housing has relatively high dimensional accuracy, which helps ensure the assembly accuracy, facilitates the first housing in supporting the first side portion well, and ensures the effect of anti-collision protection for the first side portion.

In an implementation, the receiving cavity narrows at the opening, an end of the first housing away from the second housing is connected to the first side portion, and an end of the second housing away from the first housing is connected to the second side portion. In this implementation, a circumferential length of an inner wall of the receiving cavity at a highest arch is the largest, and a circumferential length at the opening is smaller than the largest circumferential length. The circumferential length of the inner wall of the receiving cavity tends to decrease from the highest arch to the opening. The circumferential length may be calculated in the following manner: several planes substantially parallel to the main body portion are respectively intersected with the inner wall of the receiving cavity to obtain several intersection lines. A length of each intersection line may be referred to as a circumferential length of the inner wall of the receiving cavity. The first housing and the second housing substantially fill the receiving cavity, and jointly support the appearance member with the narrowing inner cavity. The appearance member with the narrowing inner cavity may be prone to impact, extrusion, and hitting when fitted with the first housing. However, because the first anti-collision portion with a relatively soft texture is designed in this implementation, the impact, extrusion, and hitting on the first side portion can be reduced, concentration of stress generated on the inner wall of the first side portion can be avoided, and the risk of damage to the first side portion can be reduced, so that the reliability of the appearance member is improved.

In an implementation, the first side portion and the second side portion are both arcuate, and are both arched in a direction away from each other. Such an arcuate bent structure can create a full and expanded appearance effect, which enables the electronic device to provide better appearance experience, and can enhance the sense of holding of a user. In addition, the appearance member with the arcuate bent structure may be prone to impact, extrusion, and hitting when fitted with the first housing. However, because the first anti-collision portion with a relatively soft texture is designed in this implementation, the impact, extrusion, and hitting on the first side portion can be reduced, concentration of stress generated on the inner wall of the first side portion can be avoided, and the risk of damage to the first side portion can be reduced, so that the reliability of the appearance member is improved.

In an implementation, a bending angle of the first side portion is 90° to 180°; and/or, a bending angle of the second side portion is 90° to 180°. In this implementation, a tangent line L1 of the first side portion is made at a position in which the first side portion is connected to the main body portion, and a tangent line L2 of the first side portion is made at an end portion of the first side portion away from the main body portion. The tangent line L1 and the tangent line L2 are both rays. An angle formed between the tangent line L1 and the tangent line L2 by rotating from the tangent line L1 to the tangent line L2 is referred to as a bending angle. The bending angles of the first side portion and the second side portion are set independently, and may be the same or different. Setting the bending angles within the range can enable the electronic device to provide better appearance experience and enhance the sense of holding of a user. In addition, by designing the first anti-collision portion with a relatively soft texture, the reliability of the appearance member with such bending angles can be improved.

In an implementation, the first side portion includes at least two flat portions, one of the at least two flat portions is connected to the main body portion to form an included angle, and every two adjacent flat portions are connected to form an included angle; and/or the second side portion includes at least two flat portions, one of the at least two flat portions is connected to the main body portion to form an included angle, and every two adjacent flat portions are connected to form an included angle. In this implementation, the first side portion is formed by at least two flat portions, the flat portions of the first side portion are substantially in a flat plate shape, and there is a bending angle between adjacent flat portions. The appearance of such an appearance member is relatively tough, which can meet requirements of some application scenarios, such as an application scenario in which the electronic device is used as an outdoor display device. In addition, such an appearance member with the bending angles may be prone to impact, extrusion, and hitting when fitted with the first housing. However, because the first anti-collision portion with a relatively soft texture is designed in this implementation, the impact, extrusion, and hitting on the first side portion can be reduced, concentration of stress generated on the inner wall of the first side portion can be avoided, and the risk of damage to the first side portion can be reduced, so that the reliability of the appearance member is improved.

In an implementation, the material hardness of the first anti-collision portion is Shore D60 to Shore D90, such as Shore D60, Shore D70, Shore D80, and Shore D90. The first anti-collision portion with such material hardness facilitates alleviating the problem of uneven stress on the first side portion.

in an implementation, a material of the first anti-collision portion is plastic, a bio-based material, a composite material, foam ceramic, Kevlar, nanocellulose, or a carbon fiber; and/or, a material of the support portion is metal, ceramic, Kevlar, nanocellulose, a composite material, or a carbon fiber. In this implementation, the material of the first anti-collision portion and the material of the support portion may be independently selected. The use of the foregoing materials to manufacture the first anti-collision portion and the support portion can avoid concentration of stress generated on the inner wall of the first side portion, and ensure the structural strength and manufacturability of the first housing.

In an implementation, the appearance member is a display screen. In this implementation, because the display screen has a first side portion and a second side portion that are bent relative to the main body portion, a display viewing angle of the display screen is relatively large, which can improve user experience. In addition, by designing the first anti-collision portion with a relatively soft texture, anti-collision protection can be provided for the display screen that requires key protection, thereby improving the reliability of the display screen.

In an implementation, the electronic device includes a circuit board assembly and a conductive member; the circuit board assembly is located on an inner side of the appearance member and is fixed to a side of the second housing facing away from the appearance member; the conductive member is mounted on the circuit board assembly and is connected to the support portion; and the support portion serves as an antenna radiator. In this implementation, the circuit board assembly can implement electrical control of the electronic device, so that the electronic device has electrical performance. The circuit board assembly may include a circuit board and a circuit deployed on the circuit board. The circuit may include a radio frequency circuit that may be configured to convert a baseband signal into a radio frequency signal. A ground pole may be further deployed on the circuit board. The ground pole may be a conductor, and may be used as a zero potential reference point of the circuit board. The conductive member may be used as a feeding component or a grounding component. The support portion may be electrically connected to the radio frequency circuit of the circuit board assembly through the conductive member, to receive a radio frequency signal, convert the radio frequency signal into an electromagnetic wave signal, and then radiate the electromagnetic wave signal. The conductive member may be used as a feeding component to feed the radio frequency signal into the support portion. Alternatively, the conductive member may be used as a grounding component to implement the grounding of the support portion. According to this implementation, the support portion can function as both structural support and an antenna radiator, which can avoid additional arrangement of an antenna radiator, and simplify the product structure.

In an implementation, the electronic device is a mobile phone, and the first housing and the second housing are both middle frames of the mobile phone. According to this implementation, anti-collision protection can be provided for the appearance member (for example, a curved surface screen) of the mobile phone, thereby improving the reliability of the appearance member and the whole machine. In addition, by designing two separate middle frames, the problem that it is difficult for such an integrated appearance member with a bending transition structure to be mounted into an integrated middle frame can be resolved.

### BRIEF DESCRIPTION OF DRAWINGS

FIG. 1 is a schematic three-dimensional structural diagram of an electronic device according to Embodiment 1;
FIG. 2 is a schematic exploded structural diagram of the electronic device in FIG. 1;
FIG. 3 is a schematic side structural diagram of an appearance member of the electronic device in FIG. 2;
FIG. 4 is a schematic cross-sectional structural diagram along A-A of the electronic device in FIG. 1;
FIG. 5 is a partially enlarged schematic structural diagram of a portion B in FIG. 4;
FIG. 6 is a schematic cross-sectional structural diagram of a first housing in FIG. 5;
FIG. 7 is a schematic cross-sectional structural diagram of a first housing according to another embodiment;
FIG. 8 is a schematic cross-sectional structural diagram along A-A of an electronic device in Embodiment 2;
FIG. 9 is a partially enlarged schematic structural diagram of a portion B in FIG. 8;
FIG. 10 is a schematic cross-sectional structural diagram along A-A of an electronic device in Embodiment 3;
FIG. 11 is a partially enlarged schematic structural diagram of a portion B in FIG. 10;
FIG. 12 is a schematic cross-sectional structural diagram along A-A of an electronic device in Embodiment 4;
FIG. 13 is a partially enlarged schematic structural diagram of a portion B in FIG. 12;
FIG. 14 is a schematic cross-sectional structural diagram along A-A of an electronic device in Embodiment 5;
FIG. 15 is a schematic cross-sectional structural diagram of an appearance member of the electronic device in FIG. 14; and
FIG. 16 is a partially enlarged schematic structural diagram of a portion B in FIG. 14.

### DESCRIPTION OF EMBODIMENTS

The following embodiments of this application provide an electronic device. The electronic device includes, but is not limited to, a mobile phone, a tablet computer, a wearable device (such as a virtual display device, an enhanced display device, and a smart watch), a smart screen device, an in-vehicle device (such as an on-board unit), a mobile power pack, an e-book reader, and the like. A description is made below by using an example in which the electronic device is a mobile phone.

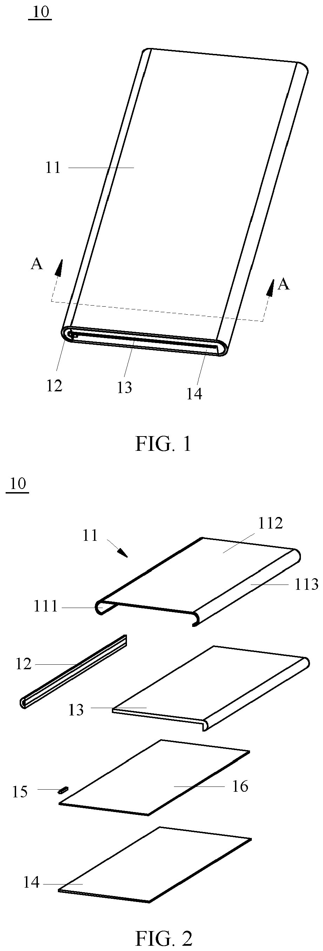

In Embodiment 1, as shown in FIG. 1 and FIG. 2, the electronic device 10 may include an appearance member 11, a first housing 12, a second housing 13, a cover member 14, a circuit board assembly 16, and a conductive member 15.

The appearance member 11 is a component of the electronic device 10 that is exposed to the outside and that can be directly observed by a user. The appearance member 11 may be a component with only mechanical functions, such as a housing. The appearance member 11 may alternatively be an electronic component, such as a display screen (which may be referred to as a main screen), and may be specifically a curved surface screen. In one manner, the display screen may include a cover plate and a display layer that are attached to each other. The cover plate protects the display layer and may be touched by a user. The display layer may be formed through superimposition of a plurality of layers of materials, and the display layer has a plurality of pixels, which can implement display. In another manner, different from the foregoing manner, the display screen may further include a circuit structure for driving and controlling the display layer, such as a flexible circuit board, data lines, driving lines, and elements. Such circuit structures are deployed outside the display layer. Alternatively, in still another manner, several circuit structures such as data lines, driving lines and/or elements may be integrated in the display layer.

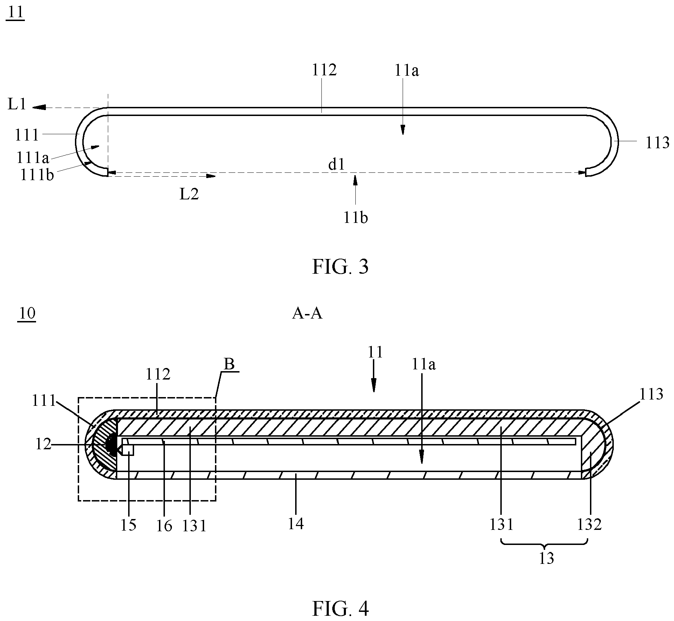

As shown in FIG. 2 and FIG. 3, the appearance member 11 may include a first side portion 111, a main body portion 112, and a second side portion 113, and the main body portion 112 is connected between the first side portion 111 and the second side portion 113. The main body portion 112 may have a flat plate-shaped structure or a bent plate-shaped structure with a substantially uniform thickness (the flat plate-shaped structure is used as an example). Alternatively, the main body portion 112 may have a flat plate-shaped structure or a bent plate-shaped structure with a nonuniform thickness. An outer contour of the main body portion 112 may be approximately rectangular. The specific structure of the main body portion 112 is not further limited in this embodiment of this application.

The structures of the first side portion 111 and the second side portion 113 may be substantially the same or different (the structures being substantially the same is used as an example, and the two side portions may be substantially symmetrically distributed on two sides of the main body portion 112). The first side portion 111 and/or the second side portion 113 may have a bent plate-shaped structure with a substantially uniform or nonuniform thickness (a substantially uniform thickness is used as an example). The first side portion 111 and the second side portion 113 may each be bent and arched in a direction away from each other, for example, approximately in an arc shape. Such a structure connected by the first side portion 111 and the main body portion 112 may be referred to as the first side portion 111 being bent relative to the main body portion 112, that is, transitioning from the flat main body portion 112 to the bent first side portion 111. Similarly, such a structure connected by the second side portion 113 and the main body portion 112 may be referred to as the second side portion 113 being bent relative to the main body portion 112.

The bending angle of the first side portion 111 and the bending angle of the second side portion 113 may both reach 150° to 180° (including 150° and 180°). As shown in FIG. 3, taking the first side portion 111 as an example, the bending angle may be defined in the following manner: a tangent line L1 of the first side portion 111 is made at a position in which the first side portion 111 is connected to the main body portion 112, and a tangent line L2 of the first side portion 111 is made at an end portion of the first side portion 111 away from the main body portion 112. The tangent line L1 and the tangent line L2 are both rays. An angle formed between the tangent line L1 and the tangent line L2 by rotating from the tangent line L1 to the tangent line L2 is referred to as a bending angle. The bending angle of the first side portion 111 shown in FIG. 4 may be 180°.

In Embodiment 1, the bending angle of the second side portion 113 may also be 180°. That is, lengths of the first side portion 111 and the second side portion 113 in a bending direction may both be half of a circumference. Alternatively, the bending angle of the first side portion 111 and the bending angle of the second side portion 113 may be different. In this case, the lengths of the first side portion 111 and the second side portion 113 in the bending direction may be different.

In Embodiment 1, the bending angle of the first side portion 111 and the bending angle of the second side portion 113 may reach 150° to 180°, and it may be considered that two sides of the appearance member 11 form a large-arc bending structure. Such a large-arc bending structure can create a full and expanded appearance effect, which enables the electronic device 10 to provide better appearance experience, and can enhance the sense of holding of a user.

As shown in FIG. 3, the first side portion 111, the main body portion 112, and the second side portion 113 may enclose a receiving cavity 11a with an opening, where an opening 11b is formed between an end of the first side portion 111 away from the main body portion 112 and an end of the second side portion 113 away from the main body portion 112. The receiving cavity 11a may be approximately C-shaped. The receiving cavity narrows at the opening 11b. A circumferential length of an inner wall of the receiving cavity 11a at a highest arch is the largest, and a circumferential length d1 at the opening 11b is smaller than the largest circumferential length. The circumferential length of the inner wall of the receiving cavity 11a tends to decrease from the highest arch to the opening 11b. The circumferential length may be calculated in the following manner: several planes substantially parallel to the main body portion 112 are respectively intersected with the inner wall of the receiving cavity 11a to obtain several intersection lines. A length of each intersection line may be referred to as a circumferential length of the inner wall of the receiving cavity 11a.

As shown in FIG. 3, the bent first side portion 111 may enclose a first receiving space 111a, and the first receiving space 111a serves as an inside space of the first side portion 111. The first receiving space 111a may be an approximately semicircular open cavity, and a junction (shown by a vertical dashed line at the tangent line L1 in FIG. 3) of the first side portion 111 and the main body portion 112 may be used as a boundary of the first receiving space 111a. The first receiving space 111a is a region of the receiving cavity 11a. The first receiving space 111a is configured for receiving the first housing 12 (the description is continued below). The first receiving space 111a has an inner surface 111b (that is, the inner surface 111b of the first side portion 111).

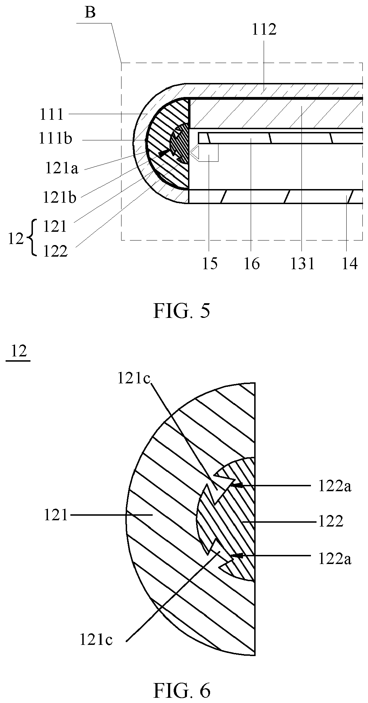

As shown in FIG. 2 and FIG. 4, the first housing 12 may be approximately semi-cylindrical, and a cross section thereof (a cross section perpendicular to an extending direction thereof) may be approximately semi-circular. As shown in FIG. 3 and FIG. 5, the first housing 12 is mounted in the first receiving space 111a of the first side portion 111. For example, the first housing 12 may be connected to an inner wall of the first receiving space 111a. The connection includes that the first housing 12 and the inner wall of the first receiving space 111a are indirectly connected through a medium (such as adhesive and foam), and may further include that the first housing 12 is in direct contact with the inner wall of the first receiving space 111a. The first housing 12 is entirely located in the first receiving space 111a, and the first housing 12 substantially just fills the first receiving space 111a. That is, a boundary of the first housing 12 is substantially flush with a boundary of an opening of the first receiving space 111a.

In other embodiments, the first housing 12 is only partially located in the first receiving space 111a and partially located outside the first receiving space 111a; or the first housing 12 is entirely located in the first receiving space 111a, but the boundary of the first housing 12 is retracted within the boundary of the opening of the first receiving space 111a.

As shown in FIG. 5, the first housing 12 may include a first anti-collision portion 121 and a support portion 122 that are connected to each other. The first anti-collision portion 121 and the support portion 122 may be connected as a whole; or the first anti-collision portion 121 and the support portion 122 may be manufactured separately and then assembled together.

As shown in FIG. 5 and FIG. 2, the first anti-collision portion 121 may be strip-shaped and have a cross-sectional structure that is approximately arcuate plate-shaped. As shown in FIG. 5, the first anti-collision portion 121 may have a surface 121a that is approximately a semi-cylindrical surface. As shown in FIG. 3 and FIG. 5, the surface 121a of the first anti-collision portion 121 and the inner surface 111b of the first receiving space 111a are substantially profiled (similar to each other). The surface 121a and the inner surface 111b may be in direct contact. Alternatively, the surface 121a and the inner surface 111b may be indirectly connected through a medium. For example, the surface of the surface 121a may be bonded with foam, and the foam may be in contact with the inner surface 111b; or the surface 121a and the inner surface 111b may be bonded by using adhesive. The first anti-collision portion 121 may substantially just fill the first receiving space 111a. That is, a boundary of the first anti-collision portion 121 is substantially flush with the boundary of the first receiving space 111a. In other embodiments, the first anti-collision portion 121 is only partially located in the first receiving space 111a and is partially outside the first receiving space 111a; or the first anti-collision portion 121 is entirely located in the first receiving space 111a, but the boundary of the first anti-collision portion 121 is retracted within the boundary of the opening of the first receiving space 111a.

As shown in FIG. 5, the first anti-collision portion 121 having an arcuate bent shape may enclose a second receiving space, and an inner surface of the second receiving space 121b may be approximately a semi-cylindrical surface. The second receiving space 121b is configured for receiving the support portion 122, which is described below.

In Embodiment 1, the first anti-collision portion 121 may be made of a material with a relatively soft texture. For example, the material hardness of the first anti-collision portion 121 may be Shore D60 to Shore D90, such as Shore D60, Shore D70, Shore D80, and Shore D90. The first anti-collision portion 121 with such material hardness facilitates alleviating the problem of uneven stress on the first side portion 111 (the description is continued below). A material modulus of the first anti-collision portion 121 may be 1000 MPa to 15000 MPa (including endpoint values), so that the first anti-collision portion 121 has certain deformation performance, and the problem of uneven stress of the first side portion 111 can be alleviated (the description is continued below). Material strength of the anti-collision portion 121 may be 20 MPa to 200 MPa (including endpoint values), so that the first anti-collision portion 121 has suitable structural support performance.

In Embodiment 1, the material of the first anti-collision portion 121 may be plastic, including but not limited to polybutylene terephthalate (polybutylene terephthalate, PBT) containing 20% glass fiber (glass fiber, GF), polycarbonate (polycarbonate, PC) containing 20% glass fiber, polyamide (polyamide, PA), and polyphenylene sulfide (polyphenylene sulfide, PPS). Alternatively, the material of the first anti-collision portion 121 may be a bio-based material (a material obtained by extracting and processing components from animals and plants), a composite material, foam ceramic, Kevlar, nanocellulose, a carbon fiber, and the like. The first anti-collision portion 121 cannot transmit electromagnetic waves, and may be, for example, an insulator.

As shown in FIG. 5 and FIG. 2, the support portion 122 may be approximately column-shaped or strip-shaped. As shown in FIG. 5, the support portion 122 is entirely located in the second receiving space 121b of the first anti-collision portion 121. The support portion 122 may substantially just fill the second receiving space 121b. That is, a boundary of the support portion 122 is substantially just flush with a boundary of an opening of the second receiving space 121b. The shape of the support portion 122 may be adapted to the shape of the second receiving space 121b. The inner surface of the second receiving space 121b may cover the support portion 122. That is, the inner surface of the second receiving space 121b may be substantially seamlessly attached to a surface of the support portion 122. In other embodiments, the support portion 122 is only partially located in the second receiving space 121b and is partially outside the second receiving space 121b; or the support portion 122 is entirely located in the second receiving space 121b, but the boundary of the support portion 122 is retracted within the boundary of the opening of the second receiving space 121b.

In Embodiment 1, the support portion 122 may be used as a structural bearing component in the first housing 12 to ensure the structural strength of the first housing 12. Material strength of the support portion 122 may be 100 MPa to 500 MPa, such as 100 MPa, 200 MPa, 350 MPa, or 500 MPa. The material strength of the support portion 122 has a relatively great impact on the structural strength of the first housing 12, and setting a material modulus of the support portion 122 within the foregoing range can better ensure the structural strength of the first housing 12. The material modulus of the support portion 122 may be 40 GPa to 100 GPa, such as 40 GPa, 60 GPa, 80 GPa, or 100 GPa. A material toughness (or referred to as elongation at break) of the support portion 122 may be 1% to 20%, such as 1%, 5%, 10%, or 20%. The material modulus and material toughness of the support portion 122 also have an impact on the structural strength of the first housing 12. Setting at least one of the two material parameters within the foregoing corresponding range can optimize the structural strength of the first housing 12.

In Embodiment 1, the material hardness of the support portion 122 may be greater than the material hardness of the first anti-collision portion 121. That is, the texture of the support portion 122 is relatively hard, and the texture of the first anti-collision portion 121 is relatively soft. This enables the support portion 122 to maintain a constant surface shape, which facilitates the support portion 122 in performing a structural bearing function.

In Embodiment 1, the material of the support portion 122 may be metal, such as aluminum profile (6013, 6063, 5083, 7075, and the like), die-cast aluminum (for example, ADC12), magnesium alloy (for example, AZ91D), copper alloy, or stainless steel (such as 301 and 304). Alternatively, the material of the support portion 122 may be ceramic, Kevlar, nanocellulose, a composite material, a carbon fiber, or the like.

As shown in FIG. 6, a surface of the support portion 122 facing the first anti-collision portion 121 may form at least one groove 122a. For example, FIG. 6 shows two grooves 122a. The grooves 122a are spaced apart. The groove 122a may be approximately a dovetail groove. That is, as shown in FIG. 5, a cross-sectional shape of the groove 122a may be approximately a trapezoid, and the trapezoid has a wider bottom edge and a narrower top end.

As shown in FIG. 6, a surface of the first anti-collision portion 121 facing the support portion 122 may form at least one protrusion 121c, and a quantity of the protrusions 121c may be the same as a quantity of the grooves 122a. The protrusions 121c are spaced apart. A shape of the protrusion 121c may be adapted to a shape of the groove 122a. That is, as shown in FIG. 6, a cross-sectional shape of the protrusion 121c may be approximately a trapezoid, and the protrusion 121c has a narrower root and a wider top. The protrusions 121c are fitted with the grooves 122a, or referred to as that the protrusions 121c are inserted into the grooves 122a to form a connection. The dovetail groove-shaped grooves 122a enable the protrusions 121c to be reliably fitted with the grooves 122a, and ensure that the first anti-collision portion 121 and the support portion 122 are firmly connected.

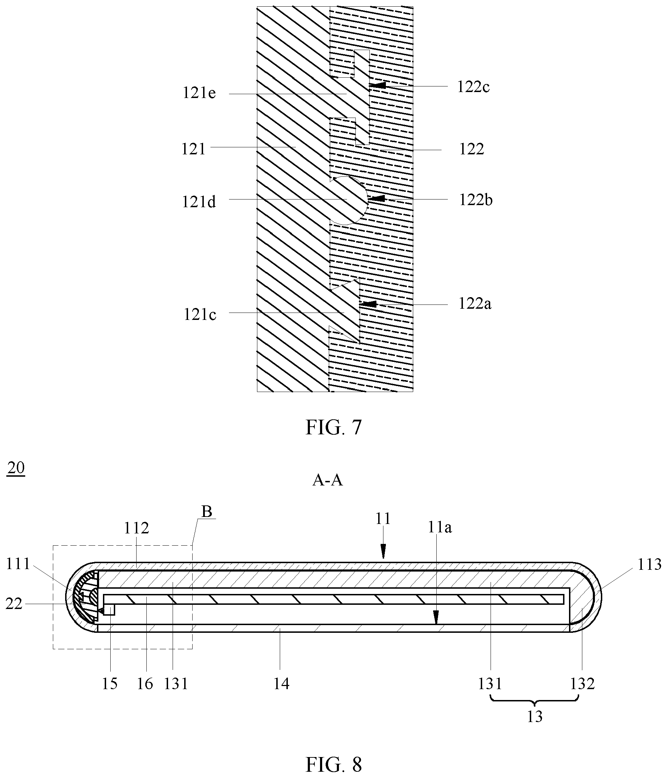

The shape of the groove 122a on the support portion 122 and the shape of the protrusion 121c on the first anti-collision portion 121 in FIG. 6 are merely examples, and this embodiment of this application is not limited thereto. For example, as shown in FIG. 7 (FIG. 7 only shows a fitting relationship between the first anti-collision portion 121 and the support portion 122, and does not limit specific structures of the first anti-collision portion 121 and the support portion 122), in addition to the grooves 122a, the surface of the support portion 122 may be further provided with grooves in other shapes, such as a groove 122c that is approximately T-shaped, and a groove 122b that is approximately arc-shaped (which may be a semicircle, a superior arc, or an inferior arc). There may be at least one groove 122a, groove 122b, and groove 122c. Correspondingly, a protrusion 121d on the first anti-collision portion 121 has a shape adapted to the groove 122b, and the protrusion 121d is fitted with the groove 122b; and a protrusion 121e on the first anti-collision portion 121 has a shape adapted to the groove 122c, and the protrusion 121e is fitted with the groove 122c.

It may be understood that, the support portion 122 in FIG. 7 has the groove 122a, the groove 122b, and the groove 122c at the same time, and the first anti-collision portion 121 has the protrusion 121c, the protrusion 121d, and the protrusion 121e at the same time. This is merely an example. Actually, at least one type of groove may be provided on the support portion 122, and at least one type of protrusion may be formed on the first anti-collision portion 121.

In Embodiment 1, the positions of the groove and the protrusion may be interchanged. That is, a groove may be formed on the first anti-collision portion 121, and a protrusion may be formed on the support portion 122, where the protrusion is fitted with the groove. Therefore, in this embodiment of this application, it may be considered that a first fitting portion is formed on the first anti-collision portion 121, a second fitting portion is formed on the support portion 122, and one of the first fitting portion and the second fitting portion is a groove and the other is a protrusion. In other embodiments, the first anti-collision portion 121 and the support portion 122 may alternatively be connected through other structures or in other manners, which is not limited to the fitting between protrusions and grooves.

In Embodiment 1, the first anti-collision portion 121 and the support portion 122 may be manufactured through an integrated process. For example, the first anti-collision portion 121 and the support portion 122 may be formed through an in-mold injection process. The support portion 122 may be placed into a mold cavity of an injection molding device to make molten plastic adhere to the surface of the support portion 122. The plastic and the support portion 122 may be reliably combined through processes such as pressure holding and cooling, and finally the first housing 12 is obtained. The plastic part forms the first anti-collision portion 121, and the first anti-collision portion 121 and the support portion 122 are connected as a whole. The protrusions on the first anti-collision portion 121 may be formed naturally during the adhesion of the molten plastic.

It may be understood that, the foregoing formation through the in-mold injection molding process is only an example, and the first housing 12 may alternatively be manufactured through other suitable processes. For example, a nano-injection process may be used, or the nano-injection process and the in-mold injection process may be used to form the integrated first housing 12. Alternatively, the first anti-collision portion 121 and the support portion 122 may be manufactured by using suitable processes respectively, and are then assembled. For example, the support portion 122 may be inserted into the second receiving space 121b of the first anti-collision portion 121 in a manner similar to pushing a drawer.

As shown in FIG. 2 and FIG. 4, the second housing 13 is mounted in the receiving cavity 11a of the appearance member 11, and the second housing 13 may be in direct contact with the inner wall of the receiving cavity 11a. Alternatively, the second housing 13 may be indirectly connected to the inner wall of the receiving cavity 11a through a medium. For example, the surface of the second housing 13 may be bonded with foam, and the foam may be in contact with the inner wall of the receiving cavity 11a; or the second housing 13 and the inner wall of the receiving cavity 11a may be bonded by using adhesive. In a direction from the first side portion 111 to the second side portion 113, the first housing 12 and the second housing 13 are adjacent to each other side by side. For example, in the perspective of FIG. 4, the first housing 12 and the second housing 13 are adjacent to each other side by side in a left-right direction, instead of being stacked in an up-down direction. The first housing 12 and the second housing 13 may be fixedly connected through, for example, bonding, clamping by using a buckle structure, or a connection by using a connecting member (for example, a screw). Alternatively, the first housing 12 and the second housing 13 may not form a connection, and may be placed side by side with a gap maintained in between. The gap may be relatively small to ensure reliable support of the first housing and the second housing for the appearance member 11.

As shown in FIG. 4, the shape of the second housing 13 may be adapted to the shape of the receiving cavity 11a. The second housing 13 may include a first part 131 and a second part 132, and the first part 131 and the second part 132 may be connected as a whole or assembled together. The first part 131 may be approximately plate-shaped, and may be substantially profiled with the main body portion 112 of the appearance member 11, and the first part 131 is connected to the main body portion 112. The second part 132 may be approximately in a semi-cylindrical shape, and a cylindrical side surface of the second part 132 may be approximately tangent to a surface of the first part 131 facing the main body portion 112. The second part 132 may be further considered as a wall structure protruding toward a side of the first part 131 (for example, a lower side of the first part 131 in FIG. 4). The second part 132 may be substantially profiled with the second side portion 113. The second part 132 may be substantially sticked to the surface of the second side portion 113, and the second part 132 is connected to the second side portion 113.

In Embodiment 1, the first housing 12 is located in the first receiving space 111a of the receiving cavity 11a of the appearance member 11, and the second housing 13 substantially occupies regions in the receiving cavity 11a other than the first receiving space 111a. Such a design makes a joining line between the second housing 13 and the first housing 12 (that is, a dividing line between the second housing and the first housing) close to the first side portion 111 of the appearance member 11, and a relatively large and continuous surface of the first part 131 of the second housing 13 may be used to support the main body portion 112 of the appearance member 11, to ensure the reliability of the main body portion 112. For example, when the first part 131 is in a flat plate shape, the relatively large and continuous surface of the first part 131 can ensure relatively high flatness, and can be more precisely fitted with the main body portion 112 that is also in a flat plate shape, thereby ensuring the reliability of the main body portion 112.

It may be understood that, this is only an example, and this embodiment of this application is not limited thereto actually. For example, the size of the first housing 12 may be increased, and the first housing 12 may include a part located in the first receiving space 111a and a part outside the first receiving space 111a. The part of the first housing 12 located outside the first receiving space 111a and the first part 131 of the second housing 13 jointly support the main body portion 112 of the appearance member 11.

In Embodiment 1, similar to the first housing 12, the second housing 13 may also include a first anti-collision portion and a support portion. For example, the second part 132 of the second housing 13 may include a first anti-collision portion and a support portion connected to each other. The first anti-collision portion may be connected to the second side portion 113. The support portion may include a part supporting the main body portion 112 and a part supporting the second side portion 113. The part supporting the main body portion 112 may be connected to the main body portion 112. The part supporting the second side portion 113 is connected to the first anti-collision portion, and the first anti-collision portion may separate the part supporting the second side portion 113 from the second side portion 113. Such a second housing 13 may be considered to have an anti-collision design. The material selection and material parameters of the first anti-collision portion of the second housing 13 may be the same as those of the first anti-collision portion 121 of the first housing 12. The material selection and material parameters of the support portion of the second housing 13 may be the same as those of the support portion 122 of the first housing 12. Details are not described herein again.

It may be understood that, the second housing 13 with the anti-collision design is an example, and this embodiment of this application is not limited thereto actually. The second housing 13 may alternatively include a support portion but no first anti-collision portion.

In Embodiment 1, the first housing 12 and the second housing 13 may be collectively referred to as housings. The housings may be, for example, middle frames of the electronic device 10, and the first housing 12 and the second housing 13 are each a middle frame.

The electronic device 10 in Embodiment 1 includes a first housing 12 and a second housing 13, and this is only an example. This embodiment of this application is not limited thereto actually. For example, the electronic device may further include another housing, and the another housing is adjacent to the first housing 12 and the second housing 13 side by side, which are all mounted in the receiving cavity 11a of the appearance member 11.

As shown in FIG. 3 and FIG. 4, the first housing 12, the second housing 13, and the appearance member 11 may be assembled according to the following process: The first housing 12 with a relatively small size may be first placed from the opening 11b of the receiving cavity 11a into the first receiving space 111a, the second housing 13 is maintained in an inclined posture, and then one end of the second housing 13 (which is referred to as a first end) is placed from the 11b into a position in the receiving cavity 11a corresponding to the second side portion 113. In this case, the other end of the second housing 13 (which is referred to as a second end, the second end being opposite to the first end) has not entered the receiving cavity 11a. After the first end is mounted in place, the second end is placed into the receiving cavity 11a, and finally the second housing 13 is entirely received in the receiving cavity 11a.

When the first anti-collision portion 121 is fitted with the inner wall of the first receiving space 111a, because an outer layer of the first housing 12 is the first anti-collision portion 121 with a relatively soft texture, collision of the first anti-collision portion 121 on the first side portion 111 is relatively gentle, and the first side portion 111 receives relatively small impact, so that the first side portion 111 is not prone to damage. Similarly, the second housing 13 with the anti-collision design can also make the second side portion 113 not prone to damage. Therefore, the reliability of the appearance member 11 is improved.

Moreover, considering the limitation of manufacturing accuracy and/or assembly accuracy, the first housing 12 probably cannot be closely adhered to the inner wall of the first receiving space 111a, and a part of the first housing 12 may form point contact or line contact with the inner wall of the first receiving space 111a. However, because an outer layer of the first housing 12 is the first anti-collision portion 121 with a relatively soft texture, even if the first anti-collision portion 121 forms point contact or line contact with the inner wall of the first receiving space 111a, the inner wall of the first receiving space 111a is not severely extruded and hit, which can avoid concentration of stress generated on the inner wall of the first receiving space 111a, and reduce the risk of damage to the first side portion 111. Similarly, when an outer layer of the second housing 13 has the first anti-collision portion, the risk of damage to the second side portion 113 can also be reduced. Based on this, the reliability of the appearance member 11 is improved.

In addition, by designing the separate first housing 12 and second housing 13, the first housing 12 and the second housing 13 can be separately mounted in the receiving cavity 11a of the appearance member 11. Such a separate housing design can meet the assembly requirements of a relatively narrow opening 11b between the first side portion 111 and the second side portion 113 in the appearance member 11, and a relatively large overall size of the housings, and overcomes the problem of assembling the conventional housing and the appearance member 11 with large-arc bending.

As shown in FIG. 2 and FIG. 4, the circuit board assembly 16 is located in the receiving cavity 11a and may be fixed on a side of the second housing 13 facing away from the appearance member 11. The circuit board assembly 16 may be located in a space enclosed by the first part 131 and the second part 132. An edge of the circuit board assembly 16 may be close to the first housing 12. The circuit board assembly 16 can implement electrical control of the electronic device 10, so that the electronic device 10 has electrical performance. The circuit board assembly 16 may include a circuit board and a circuit deployed on the circuit board. The circuit may include a radio frequency circuit that may be configured to convert a baseband signal into a radio frequency signal. Aground pole may be further deployed on the circuit board. The ground pole may be a conductor, and may be used as a zero potential reference point of the circuit board.

As shown in FIG. 4 and FIG. 5, the conductive member 15 may be fixed on the circuit board assembly 16, for example, may be fixed on a side of the circuit board assembly 16 facing away from the second housing 13. The conductive member 15 may be mounted on the edge of the circuit board assembly 16, to facilitate a connection of the conductive member 15 with the support portion 122 of the first housing 12. The connection between the conductive member 15 and the support portion 122 may be a non-fixed connection, such as contact; or may be a fixed connection, such as welding, and clamping. The conductive member 15 has conductive performance, and may be, for example, made of a metal material (such as copper). This embodiment of this application does not limit the structure of the conductive member 15. For example, the conductive member 15 may be an elastic piece. The conductive member 15 may be used as a feeding component (which is described below), or a grounding component.

In Embodiment 1, the support portion 122 may be used as an antenna radiator. The support portion 122 may be electrically connected to the radio frequency circuit of the circuit board assembly 16 through the conductive member 15, to receive a radio frequency signal, convert the radio frequency signal into an electromagnetic wave signal, and then radiate the electromagnetic wave signal. The conductive member 15 may be used as a feeding component to feed the radio frequency signal into the support portion 122. In the foregoing description, an example in which the support portion 122 sends electromagnetic wave signals to implement antenna output is used. Actually, the support portion 122 may alternatively receive electromagnetic wave signals to implement antenna input. Alternatively, the support portion 122 may be used as an antenna radiator, and the support portion 122 may be electrically connected to the radio frequency circuit in other manners. The conductive member 15 may be used as a grounding component to implement the grounding of the support portion 122.

By using the solution of Embodiment 1, the support portion 122 can function as both structural support and an antenna radiator, which may avoid additional arrangement of an antenna radiator, and simplify the product structure.

In addition, when the appearance member 11 is an electronic component, the appearance member 11 may interfere with an antenna signal. However, because the first anti-collision portion 121 between the appearance member 11 and the support portion 122 cannot transmit electromagnetic waves, that is, the first anti-collision portion 121 that does not interfere with the antenna signal can separate the support portion 122 from the appearance member 11 that may interfere with the antenna signal, an antenna clearance region required by the support portion 122 can be provided to ensure the radiation and receiving performance of the support portion 122.

In other embodiments, the support portion 122 may not serve as an antenna radiator.

As shown in FIG. 2 and FIG. 4, the cover member 14 may be approximately in a plate shape, for example, a flat plate or a bent plate. As shown in FIG. 3, the cover member 14 may be mounted at the opening 11b of the receiving cavity 11a to close the receiving cavity 11a. The cover member 14 may be a component with only mechanical functions; or the cover member 14 may be an electronic component, such as a display screen (which may be referred to as a sub screen). The meaning of the display screen is the same as that described above, and the details are not repeated herein. When the cover member 14 is also a display screen, the electronic device 10 can implement 360-degree omnidirectional surround display.

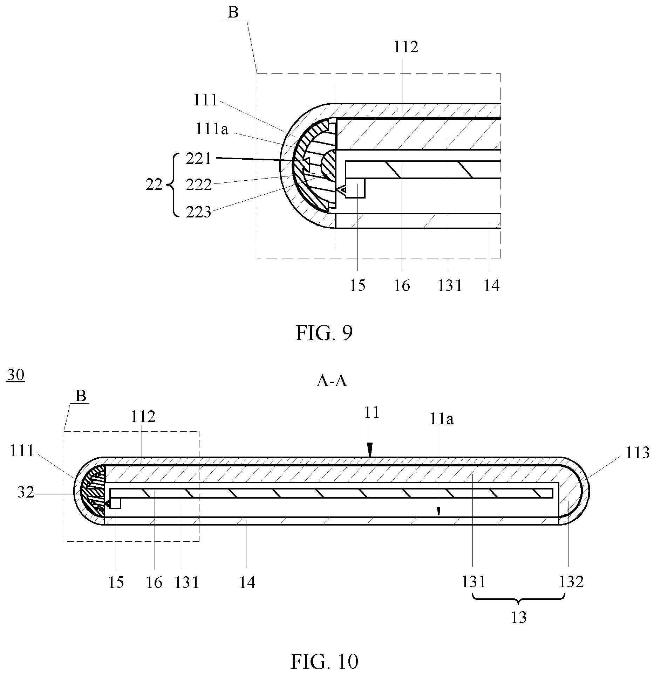

As shown in FIG. 8 and FIG. 9, in Embodiment 2, different from the foregoing Embodiment 1, a first housing 22 of an electronic device 20 may include a first anti-collision portion 221, a support portion 222, and a second anti-collision portion 223, which may be connected as a whole, or may be manufactured separately and then assembled together. The first anti-collision portion 221 is connected to the first side portion 111 of the appearance member 11. The support portion 222 is located between the first anti-collision portion 221 and the second anti-collision portion 223.

As shown in FIG. 9, the structure of the first anti-collision portion 221 may be similar to the structure of the first anti-collision portion 121 described above. For example, the first anti-collision portion 221 may have a cross-sectional structure that is approximately arcuate plate-shaped. The first anti-collision portion 221 and the first receiving space 111a are substantially profiled, and the first anti-collision portion 221 may be connected to the inner wall of the first receiving space 111a, for example, bonded by using adhesive; or a surface of the first anti-collision portion 221 may be bonded by using foam, and the foam is in contact with the inner wall of the first receiving space 111a. The first anti-collision portion 221 may also enclose a second receiving space.

As shown in FIG. 9, different from the first anti-collision portion 121, two ends of the first anti-collision portion 221 in a circumferential direction (a direction extending along an arc) may be retracted within the boundary of the first receiving space 111a (in FIG. 9, two relatively long vertical dashed lines are used to represent the boundary of the first receiving space 111a, and this is only schematic for clear expression). In other embodiments, one end of the first anti-collision portion 221 in the circumferential direction is retracted within the boundary of the first receiving space 111a, and the other end in the circumferential direction is substantially flush with the boundary of the first receiving space 111a or exceeds the boundary of the first receiving space 111a. Alternatively, the two ends of the first anti-collision portion 221 in the circumferential direction may both be substantially flush with the boundary of the first receiving space 111a.

The material selection and material parameters of the first anti-collision portion 221 may be the same as those of the first anti-collision portion 121, and the details are not repeated herein.

As shown in FIG. 9, the structure of the support portion 222 is similar to the structure of the first anti-collision portion 121 described above, and the support portion 222 may have a cross-sectional structure that is approximately arcuate plate-shaped. A boundary of the support portion 222 may be substantially just flush with the boundary of the first receiving space 111a. The difference is that two ends of the support portion 222 in the circumferential direction may both exceed the corresponding boundary of the first anti-collision portion 221, or the two ends of the first anti-collision portion 221 in the circumferential direction may both be retracted to the corresponding boundary of the support portion 222. This enables the first anti-collision portion 221 to avoid the first side portion 111 of the appearance member 11.

Due to the limitation of processing accuracy, a smooth transition between the first side portion 111 and the main body portion 112 may not be achieved, which may cause the first anti-collision portion 221 to collide or hit a transition region between the first side portion 111 and the main body portion 112. However, because avoidance is made on an end of the first anti-collision portion 221 close to the main body portion 112 in the circumferential direction, the first anti-collision portion 221 can be prevented from colliding or hitting the transition region between the first side portion 111 and the main body portion 112, thereby improving the reliability of the appearance member 11. In addition, due to the limitation of processing accuracy and/or assembly accuracy, a smooth transition between the first side portion 111 and the cover member 14 probably cannot be achieved, which may cause the first anti-collision portion 221 to collide or hit a transition region between the first side portion 111 and the cover member 14. However, because avoidance is made on an end of the first anti-collision portion 221 close to the cover member 14 in the circumferential direction, the first anti-collision portion 221 can be prevented from colliding or hitting the transition region between the first side portion 111 and the cover member 14, thereby improving the reliability of the appearance member 11.

The connection manner of the support portion 222 and the first anti-collision portion 221 may be the same as that described in Embodiment 1. The material selection and material parameters of the support portion 222 may be the same as those of the support portion 122 in Embodiment 1. Details are not described herein again.

As shown in FIG. 9, the structure of the second anti-collision portion 223 may be similar to that of the support portion 122 described above. For example, the second anti-collision portion 223 may be approximately in a semi-cylindrical shape. A semi-cylindrical surface of the second anti-collision portion 223 may be connected to the support portion 222. The connection manner of the second anti-collision portion 223 and the support portion 222 may be the same as that of the first anti-collision portion 221 and the support portion 222, and the details are not repeated herein. In other embodiments, the first housing 22 may have no second anti-collision portion 223.

The material selection and material parameters of the second anti-collision portion 223 may be the same as those of the first anti-collision portion 221, and the details are not repeated herein. Alternatively, a material hardness of the second anti-collision portion 223 and a material hardness of the first anti-collision portion 221 may be different, but are both less than a material hardness of the support portion 222. Because the texture of the second anti-collision portion 223 is relatively soft, collision damage to a component mounted in the appearance member 11 can be avoided, and the component may be, for example, a component deployed on the circuit board assembly 16.

Embodiment 2 may also have the technical effects of Embodiment 1, such as providing the appearance member 11 with relatively high reliability; overcoming the problem of assembling the conventional housing and the appearance member 11 with large-arc bending; using the support portion 222 as an antenna radiator and ensuring the radiation and receiving performance of the support portion 222; and implementing 360-degree omnidirectional surround display. In addition, in Embodiment 2, by making the avoidance design for the first anti-collision portion 221, the first anti-collision portion 221 can be prevented from colliding or hitting the transition region between the first side portion 111 and the cover member 14, or the transition region between the first side portion 111 and the main body portion 112, thereby enhancing the reliability of the appearance member 11, and avoiding collision damage to a component mounted in the appearance member 11.

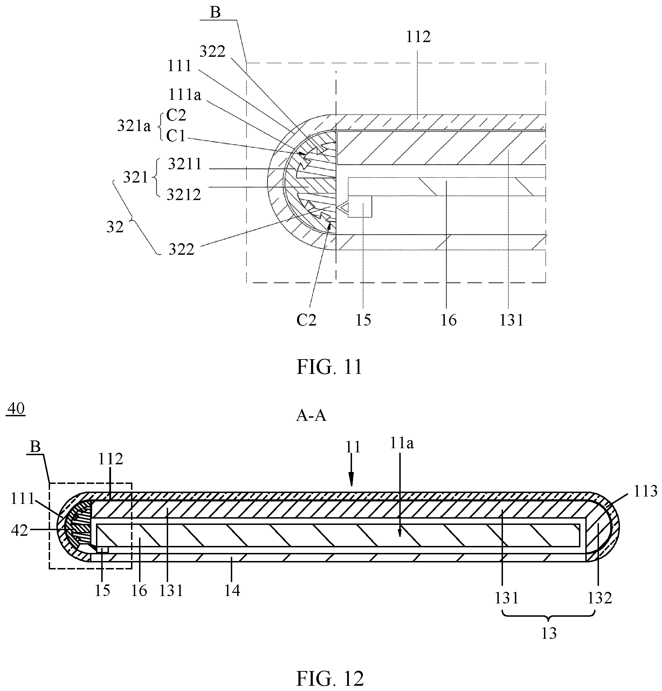

As shown in FIG. 10 and FIG. 11, different from Embodiment 1, a first housing 32 of an electronic device 30 of Embodiment 3 may include a first anti-collision portion 321 and two support portions 322.

As shown in FIG. 11, different from the structure of the first anti-collision portion 121 of Embodiment 1, the first anti-collision portion 321 of Embodiment 3 may include a connection portion 3211 and a separation portion 3212.

A structure of the connection portion 3211 may be similar to that of the first anti-collision portion 121 of Embodiment 1. For example, the connection portion 3211 may have a cross-sectional structure that is approximately arcuate plate-shaped. The connection portion 3211 may be profiled with the first side portion 111. Two ends of the connection portion 3211 in a circumferential direction (a direction extending along an arc) may both be substantially flush with the boundary of the first receiving space 111a (in FIG. 9, two relatively long vertical dashed lines are used to represent the boundary of the first receiving space 111a, and this is only schematic for clear expression) of the first side portion 111. The connection portion 3211 may be in direct contact with the inner wall of the first receiving space 111a. Alternatively, the connection portion 3211 may be indirectly connected to the inner wall of the first receiving space 111a through a medium. For example, a surface of the connection portion 3211 may be bonded with foam, and the foam may be in contact with the inner wall of the first receiving space 111a; or the surface of the connection portion 3211 and the inner wall of the first receiving space 111a may be bonded by using adhesive. The connection portion 3211 may enclose a second receiving space 321a.

The separation portion 3212 may have a cross-sectional structure that is approximately rectangular. The separation portion 3212 is connected to an inner wall of the second receiving space 321a. The separation portion 3212 divides the second receiving space 321a into a region C1 and a region C2. The separation portion 3212 may, for example, substantially divide the second receiving space 321a equally, so that shapes and sizes of the region C1 and the region C2 are substantially equal, for example, an inner wall of the region C1 and an inner wall of the region C2 are both approximately a quarter of an arc surface. Certainly, this is only an example. A position of the separation portion 3212 in the second receiving space 321a may be flexibly set as required, and the shapes and sizes of the region C1 and the region C2 may be adjusted correspondingly.

In other embodiments, at least one end of the connection portion 3211 in the circumferential direction may be retracted within the corresponding boundary of the first receiving space 111a. This is the same avoidance design as described in Embodiment 2, which can improve the reliability of the appearance member 11.

The material selection and material parameters of the first anti-collision portion 321 of Embodiment 3 may be the same as those of the first anti-collision portion 121 of Embodiment 1, and the details are not repeated herein.

As shown in FIG. 11, the region C1 and the region C2 may be each provided with a support portion 322. The support portion 322 in the region C1 may have a structure adapted to the region C1, and may substantially fill the region C1. The support portion 322 in the region C2 may have a structure adapted to the region C2, and may substantially fill the region C2. The connection manner of the two support portions 322 and the first anti-collision portion 121 may be the same as that described in Embodiment 1, and the details are not repeated herein. In other embodiments, the support portion 322 in the region C1 is partially located in the region C1, and may be partially located outside the region C1. The support portion 322 in the region C2 is partially located in the region C1, and may be partially located outside the region C1.

The material selection and material parameters of the two support portions 322 may be the same as those of the support portion 122 in Embodiment 1. Details are not described herein again. Alternatively, the materials of the two support portions 322 may be different, but may be both determined from the range of materials that may be selected for the support portion 122 in Embodiment 1. The material parameters of the two support portions 322 may be different, but may be both determined from the range of material parameters that may be selected for the support portion 122 in Embodiment 1.

Each support portion 322 may be used as an independent antenna radiator. Because the two support portions 322 are separated by the separation portion 3212, the two support portions do not electromagnetically interfere with each other. Alternatively, only one of the support portions 322 may be an antenna radiator, and the other support portion 322 may be used as a purely mechanical component without an electromagnetic wave transmission function.

In other embodiments, a quantity of separation portions 3212 may be n, where n is greater than or equal to 2. The n separation portions 3212 may divide the second receiving space 321a of the connection portion 3211 into, for example, n+1 regions, and each region may be provided with a support portion 322.

The solution of Embodiment 3 may also have the technical effects of Embodiment 1, such as providing the appearance member 11 with relatively high reliability; overcoming the problem of assembling the conventional housing and the appearance member 11 with large-arc bending; using one or two support portions 322 as antenna radiators and ensuring the radiation and receiving performance of the antenna radiators; and implementing 360-degree omnidirectional surround display.

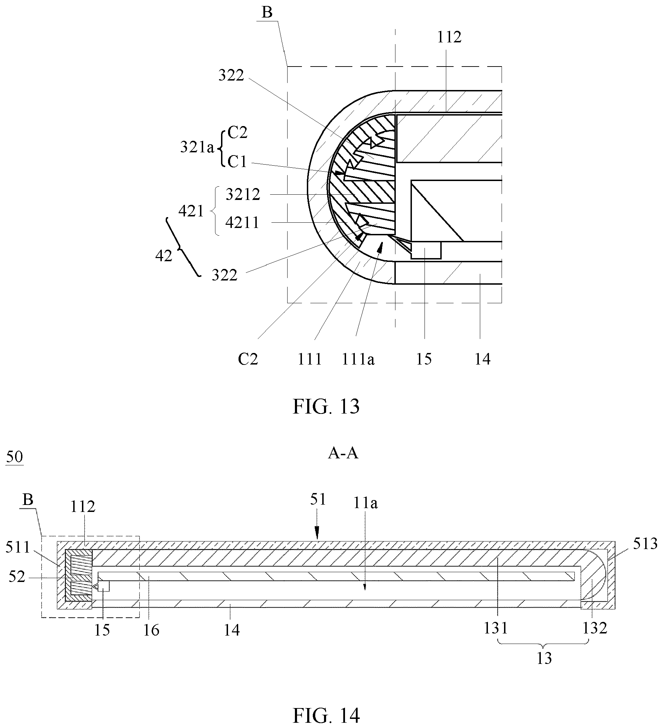

As shown in FIG. 12 and FIG. 13, in Embodiment 4, a first anti-collision portion 421 of a first housing 42 of an electronic device 40 may include a connection portion 4211 and a separation portion 3212. Different from the foregoing Embodiment 3, one end (for example, an end close to the cover member 14) of the connection portion 4211 in a circumferential direction (a direction extending along an arc) may be retracted within the corresponding boundary of the first receiving space 111a (in FIG. 13, two relatively long vertical dashed lines are used to represent the boundary of the first receiving space 111a, and this is only schematic for clear expression). That is, this end of the connection portion 4211 makes avoidance relative to the first side portion 111. This end of the connection portion 4211 with the avoidance may correspond to the region C2. There is a gap between the separation portion 322 located in the region C2 and the first side portion 111. With such an avoidance design, the connection portion 4211 can be prevented from colliding or hitting the transition region between the first side portion 111 and the cover member 14, thereby improving the reliability of the appearance member 11. It may be understood that, according to product requirements, the other end (for example, an end close to the main body portion 112) of the connection portion 4211 in the circumferential direction may also be retracted within the corresponding boundary of the first receiving space 111a.

The solution of Embodiment 4 may also have the technical effects of Embodiment 3, such as providing the appearance member 11 with relatively high reliability; overcoming the problem of assembling the conventional housing and the appearance member 11 with large-arc bending; using one or two support portions 322 as antenna radiators and ensuring the radiation and receiving performance of the antenna radiators; and implementing 360-degree omnidirectional surround display. In addition, according to the solution of Embodiment 4, by making the avoidance design for the first anti-collision portion 421, the first anti-collision portion 421 can be prevented from colliding or hitting the transition region between the first side portion 111 and the cover member 14, and/or the transition region between the first side portion 111 and the main body portion 112, thereby enhancing the reliability of the appearance member 11.

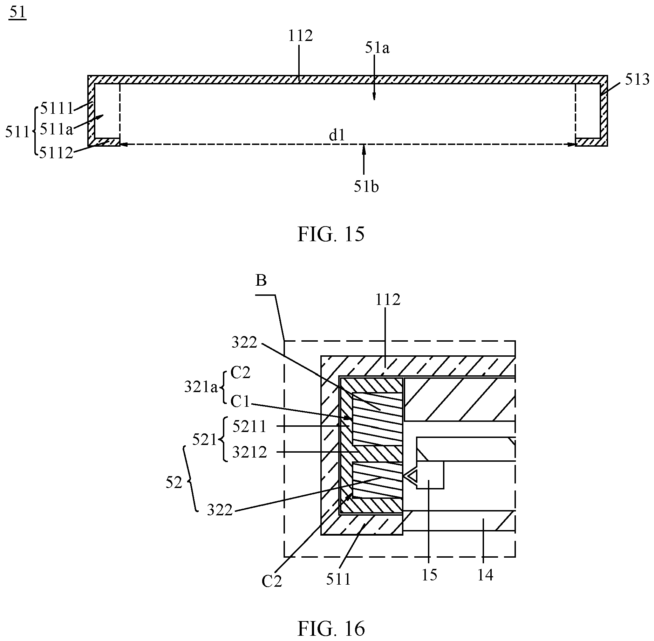

As shown in FIG. 14 and FIG. 15, in Embodiment 5, an appearance member 51 of an electronic device 50 may include a first side portion 511, a main body portion 112, and a second side portion 513.

Different from Embodiment 3, the appearance member 51 of Embodiment 5 may be approximately in a box shape. For example, the first side portion 511 may include a flat portion 5111 and a flat portion 5112, both of which may have a substantially flat plate-shaped structure. The flat portion 5111 and the flat portion 5112 are connected to form an included angle, and the included angle may be, for example, approximately 90 degrees. The flat portion 5111 may be connected to the main body portion 112 to form an included angle, and the included angle may be, for example, approximately 90 degrees. The second side portion 513 may have substantially the same structure as the first side portion 511. A first receiving space 511a enclosed by the first side portion 511 may be approximately square. A receiving cavity 51a enclosed by the appearance member 51 narrows at an opening 51b.

In other embodiments, the first side portion 511 may include one flat portion or at least three flat portions. An included angle between a flat portion and the main body portion 112 and an included angle between flat portions may be both set according to product requirements, and are not limited to approximately 90 degrees. Correspondingly, a shape of the first receiving space 511a enclosed by the first side portion 511 is also adjusted.

As shown in FIG. 16, a first anti-collision portion 521 of a first housing 52 may include a connection portion 5211 and a separation portion 3212. Different from Embodiment 3, the shape of the connection portion 5211 of Embodiment 5 may be adapted to the shape of the first receiving space 511a of the first side portion 511. For example, the connection portion 5211 may have a cross-sectional structure that is approximately box-shaped.

The appearance of the electronic device 50 of Embodiment 5 is relatively tough, which can meet requirements of some application scenarios, such as an application scenario in which the electronic device 50 is used as an outdoor display device. The solution of Embodiment 5 may also have the technical effects of Embodiment 3, such as providing the appearance member 51 with relatively high reliability; overcoming the problem of assembling the conventional housing and the appearance member 51 with large-arc bending; using one or two support portions 322 as antenna radiators and ensuring the radiation and receiving performance of the antenna radiators; and implementing 360-degree omnidirectional surround display.

In this embodiment of this application, the designs in the foregoing embodiments may be combined according to product requirements. For example, structures on different cross sections of the first housing (the cross sections are all parallel to the cross section A-A in FIG. 1) may be different, for example, structures on two cross sections may be respectively as shown in any two of FIG. 5, FIG. 9, FIG. 11, and FIG. 13, or structures on three cross sections may be respectively as shown in any three of FIG. 5, FIG. 9, FIG. 11, and FIG. 13, and so on. To realize the foregoing design, there may be at least two first housings, and the at least two first housings are assembled together. One first housing has only one cross-sectional structure, and different first housings have different cross-sectional structures. Alternatively, the first housing is an integral component, each section of the first housing has only one cross-sectional structure, and different sections have different cross-sectional structures.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention Therefore, the protection scope of the present invention shall be subject to the protection scope of the claims.

## Claims

1. An electronic device, comprising
an appearance member, a first housing, and a second housing, wherein the appearance member comprises a main body portion, and a first side portion and a second side portion respectively connected to opposite sides of the main body portion, the first side portion and the second side portion are both bent relative to the main body portion, the first side portion, the main body portion, and the second side portion enclose a receiving cavity, and the first side portion and the second side portion are spaced opposite to each other to form an opening of the receiving cavity;
the first housing is located in the receiving cavity and comprises a first anti-collision portion and a support portion connected to the first anti-collision portion, the first anti-collision portion is connected to the first side portion and located between the first side portion and the support portion, and a material hardness of the first anti-collision portion is less than a material hardness of the support portion; and
the second housing is located in the receiving cavity; and in a direction from the first side portion to the second side portion, the first housing and the second housing are adjacent to each other side by side, and the second housing is connected to the main body portion and the second side portion.

2. The electronic device according to claim 1, wherein
the first side portion is bent and encloses a first receiving space, and at least part of the first anti-collision portion is located in the first receiving space.

3. The electronic device according to claim 1 or 2, wherein
the first anti-collision portion encloses a second receiving space, and at least part of the support portion is located in the second receiving space.

4. The electronic device according to claim 3, wherein
the support portion is located in the second receiving space, and the support portion fills the second receiving space.

5. The electronic device according to claim 1 or 2, wherein
the first anti-collision portion comprises a connection portion and a separation portion; the connection portion is connected to the first side portion, and the connection portion is profiled with the first side portion and encloses a second receiving space; the separation portion is connected to an inner wall of the second receiving space, and divides the second receiving space into different regions; and each of the regions is provided with the support portion, and at least part of the support portion is located in the region.

6. The electronic device according to claim 5, wherein
the support portion is located in the region, and the support portion fills the region.

7. The electronic device according to any one of claims 1 to 6, wherein
the first housing comprises a second anti-collision portion, the second anti-collision portion is connected to a side of the support portion facing away from the first side portion, and a material hardness of the second anti-collision portion is less than the material hardness of the support portion.

8. The electronic device according to any one of claims 1 to 7, wherein
a surface of the first anti-collision portion is provided with at least one first fitting portion spaced apart, a surface of the support portion is provided with at least one second fitting portion spaced apart, and the at least one second fitting portion is connected to the at least one first fitting portion one by one, wherein one of the first fitting portion and the second fitting portion is a groove and the other is a protrusion, and the protrusion is inserted into the groove to form a connection.

9. The electronic device according to claim 8, wherein
the first anti-collision portion and the support portion are connected as a whole.

10. The electronic device according to claim 9, wherein
the receiving cavity narrows at the opening, an end of the first housing away from the second housing is connected to the first side portion, and an end of the second housing away from the first housing is connected to the second side portion.

11. The electronic device according to any one of claims 1 to 10, wherein
the first side portion and the second side portion are both arcuate, and are both arched in a direction away from each other.

12. The electronic device according to claim 11, wherein
a bending angle of the first side portion is 90° to 180°; and/or, a bending angle of the second side portion is 90° to 180°.

13. The electronic device according to any one of claims 1 to 10, wherein
the first side portion comprises at least two flat portions, one of the at least two flat portions is connected to the main body portion to form an included angle, and every two adjacent flat portions are connected to form an included angle; and/or the second side portion comprises at least two flat portions, one flat portion of the at least two flat portions is connected to the main body portion to form an included angle, and every two adjacent flat portions are connected to form an included angle.

14. The electronic device according to any one of claims 1 to 13, wherein
the material hardness of the first anti-collision portion is Shore D60 to Shore D90.

15. The electronic device according to any one of claims 1 to 14, wherein
a material of the first anti-collision portion is plastic, a bio-based material, a composite material, foam ceramic, Kevlar, nanocellulose, or a carbon fiber; and/or, a material of the support portion is metal, ceramic, Kevlar, nanocellulose, a composite material, or a carbon fiber.

16. The electronic device according to any one of claims 1 to 15, wherein
the appearance member is a display screen.

17. The electronic device according to any one of claims 1 to 16, wherein
the electronic device comprises a circuit board assembly and a conductive member; the circuit board assembly is located on an inner side of the appearance member and is fixed to a side of the second housing facing away from the appearance member; the conductive member is mounted on the circuit board assembly and is connected to the support portion; and the support portion serves as an antenna radiator.

18. The electronic device according to any one of claims 1 to 17, wherein
the electronic device is a mobile phone, and the first housing and the second housing are both middle frames of the mobile phone.
